# EUROPÄISCHE PATENTSCHRIFT

(11) **EP 1 075 739 B1**
(45) Veröffentlichungstag und Bekanntmachung des Hinweises auf die Patenterteilung: **12.11.2003**
(21) Anmeldenummer: 99919074.7
(22) Anmeldetag: 15.03.1999
(51) Int. Cl.: H04B 7/26

(54) **MIT FREQUENZSPRUNGTECHNIK ARBEITENDES DIGITALES MEHRTEILNEHMER-FUNK-NACHRICHTENÜBERTRAGUNGSSYSTEM**
DIGITAL MULTI-SUBSCRIBER RADIO TELECOMMUNICATION SYSTEM WORKING WITH FREQUENCY JUMPING
SYSTEME DE TELECOMMUNICATION NUMERIQUE MULTI-ABONNE FONCTIONNANT SELON LA TECHNIQUE DE SAUT DE FREQUENCE

(30) Priorität: 29.04.1998 DE 19819213
(43) Veröffentlichungstag der Anmeldung: 14.02.2001
(73) Patentinhaber: Infineon Technologies AG, 81669 München (DE)
(72) Erfinder: HEINEN, Stefan, D-47802 Krefeld (DE); BEYER, Stefan, D-86415 Mering (DE)
(74) Vertreter: Barth, Stephan Manuel, Dr.
(86) Internationale Anmeldenummer: DE9900708
(87) Internationale Veröffentlichungsnummer: WO99056411

(56) Entgegenhaltungen:
- EP-A- 0 670 640
- EP-A- 0 767 551
- WO-A-99/09679
- HEINEN S ET AL: "SA 18.4: A 2.7V 2.5GHZ BIPOLAR CHIPSET FOR DIGITAL WIRELESS COMMUNICATION" IEEE INTERNATIONAL SOLID STATE CIRCUITS CONFERENCE, Bd. 40, 1. Februar 1997 (1997-02-01), Seite 306/307 XP000753110 ISSN: 0193-6530

## Beschreibung

Die vorliegende Erfindung betrifft ein digitales Mehrteilnehmer-Funk-Nachrichtenübertragungssystem gemäß dem Oberbegriff des Anspruchs 1, wie aus der EP-A-0 767 551 bekannt.

Die prioritätsältere WO-A-99/09679 offenbart ein mit Frequenzsprungtechnik arbeitendes, von einem DECT-Funksystem abgeleitetes digitales Mehrteilnehmer-Funk-Nachrichtenübertragungssystem zur Anwendung im 2,4 GHz-ISM-Frequenzband, bei dem eine Anpassung der Hochfrequenzteile der im System eingesetzten Geräte an das gegenüber dem DECT-Standard geänderte ISM-Frequenzband vorgesehen ist.

Bei dem bekannten System ist eine einzuhaltende 20 dB-Kanalbreite von maximal 1 MHz vorgegeben. Es weist eine Modifikation des bekannten mit TDMA/FDMA-Technik arbeitenden DECT-Funksystems in einer Weise auf, daß die Datenübertragungsrate gegenüber der beim DECT-Standard vorgegebenen Datenübertragungsrate auf die Hälfte reduziert ist, also von 1152 kBit/s auf 576 kBit/s.

Das ISM-Frequenzband von 2400 MHz bis 2485 MHz steht weltweit für industrielle, wissenschaftliche und medizinische Zwecke zur Verfügung. In diesem UHF-Frequenzband dürfen Funkdienste, also auch Schnurlostelefone, realisiert werden. Es müssen jedoch bestimmte, genau vorgeschriebene Bedingungen beim Funkbetrieb in diesem Frequenzband eingehalten werden.

Soll ein mit Frequenzsprungtechnik (Frequency Hopping) arbeitendes digitales Mehrteilnehmer-Funk-Nachrichtenübertragungssystem in diesem 2,4 GHz-ISM-Band verwirklicht werden, so ist es von Bedeutung, daß hierzu eine streng einzuhaltende 20 dB-Bandbreite von maximal 1 MHz vorgegeben ist, die beim DECT-Standard bekanntlich überschritten wird.

Ein mit Frequenzsprungtechnik arbeitendes digitales Mehrteilnehmer-Funk-Nachrichtenübertragungssystem zur Anwendung im 2,4 GHz-ISM (Industrial Scientific and Medical)-Frequenzband ist bisher nicht bekannt. Für den WLAN-Standard IEEE 802.11 wird für die GFSK(Gaussian Frequency Shift Keying)-Modulation eine Datenübertragungsrate von 1 MBit/s festgelegt. Dies führt jedoch zu deutlich höheren Genauigkeitsanforderungen für den Modulationshub im Hochfrequenz-Teil der Funkgeräte und somit zu einem erheblich höheren technischen und damit kostenmäßigen Aufwand als beispielsweise bei DECT-Geräten. Aufgabe der Erfindung ist *es,* für *das* 2,4 GHz-ISM-Frequenzband ein mit Freguenzsprungtechnik arbeitendes digitales Mehrteilnehmer-Funk-Nachrichtenübertragungssystem zu schaffen, das auf einem bereits verbreiteten derartigen Funksystem aufbaut, so daß bei den für dieses System eingesetzten Geräten beim gewünschten Einsatz im ISM-Band nur verhältnismäßig geringe Änderungen erforderlich sind und die Änderungen in den digitalen Bausteinen von so geringem Ausmaß sind, daß sie ohne signifikanten technischen und damit kostenmäßigen Zusatzaufwand in die Geräte des bereits eingesetzten Funksystems eingebaut werden können.

Durch die Erfindung wird somit ein Frequency Hopping-System im 2,4 GHz-ISM-Band realisiert wie in Anspruch 1 definiert. Es ist erkannt worden, daß das DECT-System aufgrund seiner Rahmendauer von 10 ms in der Lage ist, die geforderten Frequenzwechsel, bei denen in 30 s maximal 0,4 s auf einer Frequenz zu bleiben ist, zu erfüllen.

Zweckmäßige Ausführungen, Weiterbildungen und eine Verwendungsmöglichkeit des Systems nach der Erfindung sind in den Unteransprüchen angegeben.

Gemäß der Erfindung wird die Datenübertragungsrate auf die Hälfte der beim DECT-Standard festgelegten Datenübertragungsrate, also von 1152 kBit/s auf 576 kBit/s reduziert. Es werden in diesem Fall in zweckmäßiger Weise zwei Zeitschlitze zusammengefaßt, um die Nettodatenübertragungsrate zu erhalten. Der Kanalabstand wird zweckmäßig ebenfalls auf die Hälfte des DECT-Kanalabstandes, also von 1532 kHz auf 864 kHz reduziert.

Die Frequenzen können somit problemlos aus einem Standard-DECT-Systemtakt generiert werden. Im Hochfrequenz-Teil der eingesetzten Geräte ist neben der Anpassung des Frontends auf den neuen Frequenzbereich nur ein neues ZF-Filter mit halber Bandbreite erforderlich.

Prinzipiell ist auch eine Reduzierung auf einen anderen Bruchteil der DECT-Datenübertragungsrate, z.B. auf 2/3 oder 3/4 der DECT-Datenübertragungsrate, mit einem anderen Kanalabstand möglich. Dies kann jedoch gegenüber der Reduzierung auf die Hälfte der DECT-Datenübertragungsrate und auf die Hälfte des DECT-Kanalabstandes zu einem Mehraufwand führen.

Im folgenden wird ein in Zeichnungen dargestelltes Ausführungsbeispiel eines Teilnehmergeräts für das digitale Mehrteilnehmer-Funk-Nachrichtenübertragungssystem zur Anwendung im 2,4 GHz-ISM erläutert. Die Zeichnungen zeigen in:
FIG. 1 ein Gesamtblockschaltbild des Sende/Empfangsgeräts eines Teilnehmers,
Fig. 2 das Blockschaltbild eines bei DECT-Geräten verwendeten PLL-Frequenzsynthesizers, und
FIG. 3 das Blockschaltbild eines für den Einsatz bei ISM-Geräten geänderten PLL-Frequenzsynthesizers.

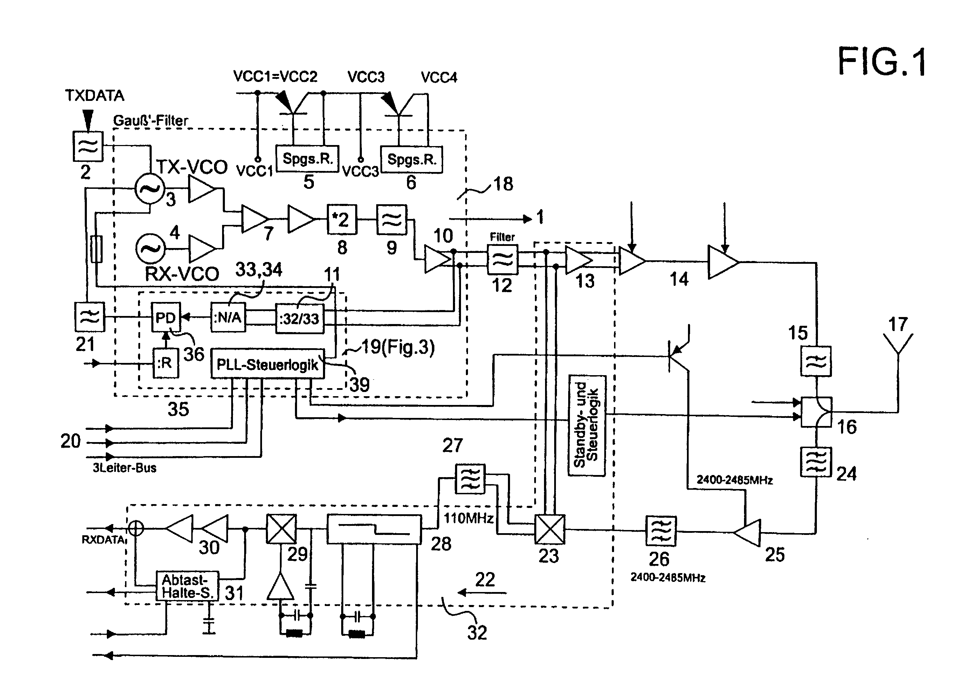

Der Sendepfad 1 des in FIG. 1 dargestellten hoch integrierten Sende/Empfängers für das ISM-Band enthält bei DECT-Geräten verwendete Bausteine und arbeitet mit Open-Loop-Modulation, wozu das zu übertragende digitale Signal TXDATA über ein Gauß'sches-Filter 2 an einen spannungsgeregelten Oszillator (VCO; Voltage Controlled Oscillator) 3 für den Sendemode geführt wird, dem ein zweiter spannungsgeregelter Oszillator 4 für den Empfangsmode beigeordnet ist. Es sind zwei Spannungsregler 5 und 6 zur Einstellung der Versorgungsspannungen des analogen HF-Teils bzw. der spannungsgeregelten Oszillatoren 3 und 4 mitintegriert.

Die spannungsgesteuerten Oszillatoren 3 und 4 erzeugen differentielle Signale, wobei diejenigen des aktiven Oszillators 3 bzw. 4 über Trennverstärker 7 in einen Frequenzverdoppler 8 und danach im Wege über ein Filter 9 und einen Verstärker 10 auch in einen Vor-Untersetzer (Prescaler) 11 eines PLL-Frequenzsynthesizers 19 eingekoppelt werden.

Das Ausgangssignal des Verstärkers 10 wird im Sendepfad 1 über ein gedrucktes Filter 12, einen Vorverstärker 13, Leistungsverstärker 14 und ein Tiefpaßfilter 15 dem Sendeeingang eines Duplexerschalter 16 zugeführt, mit dessen Antennenanschluß eine für das Senden und Empfangen gemeinsam verwendete Antenne 17 verbunden ist.

Das gewünschte Ausgangssignal im ISM-Band wird somit im Wege über einen Frequenzverdoppler 8 erzeugt, so daß die spannungsgeregelten Oszillatoren 3 und 4 auf der halben Ausgangsfrequenz betrieben werden können, wodurch für die Open-Loop-Modulation eine höhere Trennung erzielt wird.

Ein wichtiger Bestandteil des als Sendeteilchip 18 bezeichneten integrierten Schaltkreises ist der integrierte PLL-Frequenzsynthesizer 19, der mittels einer 3 Leiter-Bus-Schnittstelle 20 programmiert werden kann und durch den Vor-Untersetzer (Prescaler) 11 sowie ein Rechenwerk mit Zählern in den Teilerverhältnissen eingestellt werden kann. Darüber hinaus wird die 3 Leiter-Bus-Schnittstelle 20 zur Steuerung aller Chipfunktionen benutzt, also z.B. der verschiedenen Funktionsmoden; insbesondere werden das PLL-Rechenwerk und der Mode der spannungsgeregelten Oszillatoren 3 und 4 gesteuert.

Zur Funktion des PLL-Frequenzsynthesizers 19 gehört noch das nicht in den Sendeteilchip 18 unmittelbar mitintegrierte Schleifentiefpaßfilter 21. Die Anzahl der Schnittstellendrähte zu einer Basisband-Steuerungseinrichtung wird somit minimal gehalten.

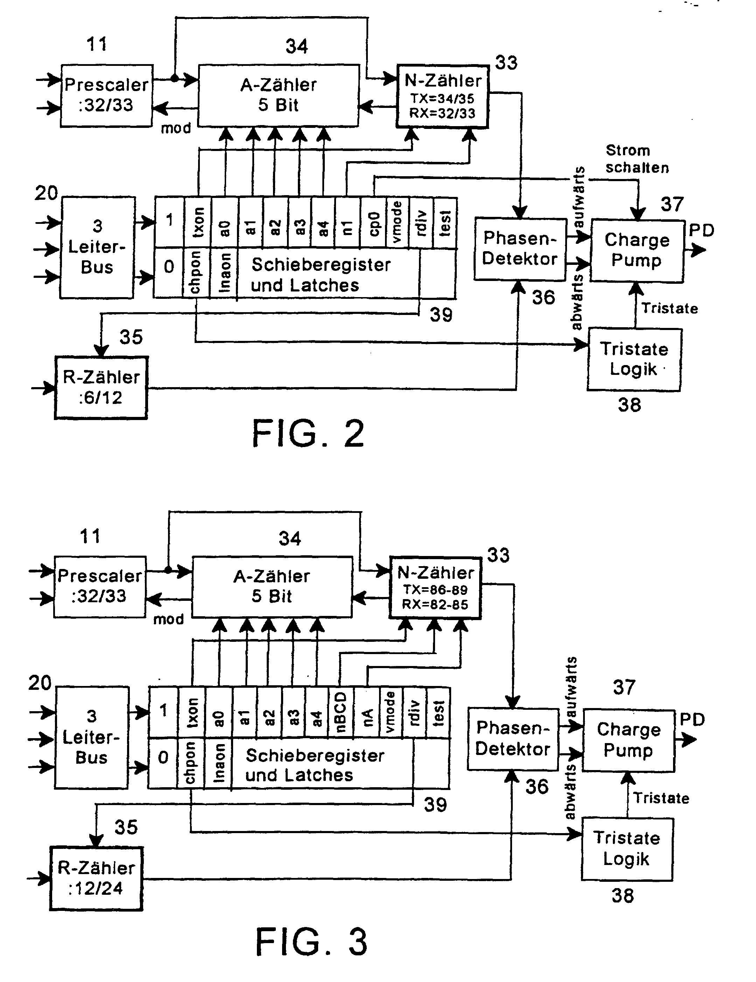

Der PLL-Frequenzsynthesizer 19 wird später in Verbindung mit den FIG. 2 und 3 noch näher erläutert. Die im Frequenzverdoppler 8 ausgeführte Frequenzverdoppelung des Ausgangssignals des aktiven differentiellen spannungsgeregelten Oszillators 3 bzw. 4 wird durch Multiplizieren des Signals mit seiner Quadraturkomponente bewerkstelligt.

An den Empfängeranschluß des Duplexerschalters 16 ist in einem Empfangspfad 22 des Sende-Empfängers ein Eingang eines Abwärtsmischers 23 über ein erstes Keramik-Bandfilter 24, einen rauscharmen Verstärker 25 und ein zweites Keramik-Bandfilter 26 angeschlossen. Die beiden Bandfilter 24 und 26 sind zum Durchlassen für das ISM-Frequenzband von 2400 MHz bis 2485 MHz ausgelegt. Der andere Eingang des Abwärtsmischers 23 wird von einem aus dem Sendepfad 1 ausgekoppelten und vom spannungsgeregelten Oszillator 4 für den Empfangsmode abgeleiteten Signal versorgt.

Das dem Abwärtsmischer 23 entnommene Ausgangssignal wird über ein ZF-Filter 27 und einen Limiter 28 geführt, dann in einem Demodulator 29 analog demoduliert und anschließend unter Verwendung von Verstärkern 30 und einer Abtast- und Halteschaltung 31 analog/digital gewandelt, so daß ein übertragenes und dann empfangenes digitales Datensignal RXDATA zur Verfügung steht. Ein Großteil des Empfangspfads 22 ist in einem Empfangsteilchip 32 integriert.

Änderungen gegenüber der ursprünglich für DECT vorgesehenen Geräteausführung bestehen somit im Hochfrequenz-Teil, dessen Frontend auf den gegenüber DECT unterschiedlichen ISM-Frequenzbereich angepaßt ist, und im ZF-Filter 27, für das die halbe DECT-Bandbreite erforderlich ist. Außerdem bestehen anschließend noch im einzelnen beschriebene Änderungen in den PLL-Teilerverhältnissen des Sendeteilchips durch eine Modifizierung bei den Zählern des Rechenwerks für den PLL-Frequenzsynthesizer 19.

FIG. 2 zeigt einen PLL-Frequenzsynthesizer, der bereits für DECT-Sende-Empfangsgeräte eingesetzt wird und zusammen mit anderen Funktionsgruppen im Sendeteilchip 18 enthalten ist. Er weist den Vor-Untersetzer (Prescaler) 11, einen N-Zähler 33, einen A-Zähler 34, einen R-Zähler 35, einen Phasendetektor 36, eine Charge Pump 37, eine Tristate-Logik 38 und eine PLL-Steuerlogik 39 auf. Der Vor-Untersetzer 11 und die Zähler bilden ein Rechenwerk, durch welches die PLL-Teilerverhältnisse festgelegt werden.

Im DECT-Betrieb kann der N-Zähler 33 zwischen 34/35 im Sendemode und 32/33 im Empfangsmode umgeschaltet werden. Der R-Zähler 35 kann zwischen 6 und 12 umgeschaltet werden, um einen Systemtakt von 10368 MHz bzw. 20376 MHz zu erlauben. Der PLL-Frequenzsynthesizer 19 ist in der Lage, die durch f_{c} = fₒ - c · 1728 kHz gegebenen DECT-Nennkanäle zu adressieren, wobei fₒ = 1897,344 MHz und c = 10,9,8,...,-53 sind.

Somit können alle DECT-Nennkanäle im Frequenzband von 1880 MHz bis 1900 MHz durch den langsam springenden FrequenzSynthesizer (c = 9,...,0) adressiert werden. Die Zwischenfrequenz wird bei 110,592 MHz angenommen. Dies ergibt einen N-Zähler-Wert von 34/35 im Sendemode und von 32/33 im Empfangsmode.

Der Phasendetektor 35 ist phasen- und frequenzsensitiv. Der Vor-Untersetzer 11 teilt die Signalfrequenz des mit 2 multiplizierten Ausgangssignals desaktiven spannungsgeregelten Oszillators 3 bzw. 4 mit einem Verhältnis 1:32 oder 1:33. Das Teilerverhältnis wird über die PLL-Steuerlogik 39 gesteuert.

Der in FIG. 3 dargestellte PLL-Frequenzsynthesizer für das ISM-Band ist gegenüber dem in FIG. 2 abgebildeten PLL-Frequenzsynthesizer für DECT an einigen Stellen modifiziert. Die modifizierten Schaltungsblöcke im Sendeteilchip 18 der FIG. 1 sind in den FIG. 2 und 3 fett umrandet.

Der N-Zähler 33 läßt sich zwischen 86 - 89 und 82 - 85, bezogen jeweils auf den Sendemode bzw. auf den Empfangsmode, umschalten. Der R-Zähler 35 kann zwischen 12 und 24 umgeschaltet werden, um einen Systemtakt von entweder 10368 MHz bzw. 20736 MHz zuzulassen. Der PLL-Frequenzsynthesizer ist in der Lage, die durch f_{c} = fₒ + c 864 kHz gegebenen ISM-Nennkanäle zu adressieren, wobei fₒ = 2377,728 MHz und c = 0,1,2,...,127 sind.

Somit können alle ISM-Nennkanäle im Frequenzband von 2400 MHz bis 2485 MHz durch einen langsam springenden Synthesizer (c = 27,...,121) adressiert werden. Die Zwischenfrequenz wird wie beim DECT-System bei 110,592 MHz angenommen. Dies ergibt für das ISM-Band einen N-Zähler-Wert von 86 - 89 im Sendemode und von 82 - 85 im Empfangsmode.

### Bezugszeichenliste

- 1: Sendepfad
- 2: Gauß'sches Filter
- 3, 4: spannungsgeregelter Oszillator (VCO)
- 5, 6: Spannungsregler
- 7: Trennverstärker
- 8: Frequenzverdoppler
- 9: Filter
- 10: Verstärker
- 11: Vor-Untersetzer (Prescaler)
- 12: Filter
- 13: Vorverstärker
- 14: Leistungsverstärker
- 15: Tiefpaßfilter
- 16: Duplexerschalter
- 17: Antenne
- 18: Sendeteilchip
- 19: PLL-Frequenzsynthesizer
- 20: 3 Leiter-Bus-Schnittstelle
- 21: Schleifentiefpaßfilter
- 22: Empfangspfad
- 23: Abwärtsmischer
- 24: Keramik-Bandfilter
- 25: rauscharmer Verstärker
- 26: Keramik-Bandfilter
- 27: ZF-Filter
- 28: Limiter
- 29: Demodulator
- 30: Verstärker
- 31: Abtast- und Halteschaltung
- 32: Empfangsteilchip
- 33: N-Zähler
- 34: A-Zähler
- 35: R-Zähler
- 36: Phasendetektor
- 37: Charge Pump
- 38: Tristate-Logik
- 39: PLL-Steuerlogik
- TXDATA: zu übertragendes digitales Signal
- RXDATA: übertragenes digitales Signal

## Patentansprüche

1. Mit Frequenzsprungtechnik (Frequency Hopping) arbeitendes, von einem DECT-Funksystem abgeleitetes digitales Mehrteilnehmer-Funk-Nachrichtenübertragungssystem zur Anwendung im 2,4 GHz-ISM-Frequenzband, bei dem eine Anpassung der Hochfrequenz-Teile der im System eingesetzten Geräte an das gegenüber dem DECT-Standard geänderte ISM-Frequenzband vorgesehen ist,
**dadurch gekennzeichnet,**
**daß** bei dem System eine einzuhaltende 20 dB-Kanalbandbreite von maximal 1 MHz vorgegeben ist;
**daß** es eine Modifikation des bekannten mit TDMA/FDMA-Technik arbeitenden DECT-Funksystems in der Weise aufweist, daß die Datenübertragungsrate gegenüber der beim DECT-Standard vorgegebenen Datenübertragungsrate auf die Hälfte reduziert ist, also von 1152 kBit/s auf 576 kBit/s, und
**daß** der Kanalabstand gegenüber dem nach dem DECT-Standard vorgegebenen Kanalabstand von 1728 kHz ebenfalls entsprechend reduziert wird.

2. Funk-Nachrichtenübertragungssystem nach Anspruch 1, **dadurch gekennzeichnet, daß** zur Erhaltung der Nettodatenübertragungsrate Zeitschlitze zusammengefaßt werden.

3. Funk-Nachrichtenübertragungssystem nach Anspruch 1, **dadurch gekennzeichnet, daß** der Kanalabstand gegenüber dem beim DECT-Standard vorgegebenen Kanalabstand von 1728 kHz ebenfalls auf die Hälfte, also auf 864 kHz reduziert wird.

4. Funk-Nachrichtenübertragungssystem nach Anspruch 1, **dadurch gekennzeichnet, daß** zur Erhaltung der Nettodatenübertragungsrate zwei Zeitschlitze zusammengefaßt werden.

5. Funk-Nachrichtenübertragungssystem nach Anspruch 1, **gekennzeichnet durch** die Verwendung von Sender- und Empfängerbaugruppen, die für ein herkömmliches DECT-System vorgesehen sind und zum Teil an die gegenüber dem DECT-Standard modifizierten Frequenzen angepaßt sind.

6. Funk-Nachrichtenübertragungssystem nach Anspruch 5, **gekennzeichnet durch** eine Generierung der Frequenzen aus einem Standard-DECT-Systemtakt.

7. Funk-Nachrichtenübertragungssystem nach Anspruch 5, **gekennzeichnet durch** einen an sich zum Einsatz in DECT-Geräten vorgesehenen Hochfrequenz-Teil, in dem neben der Anpassung des Frontends an den gegenüber dem DECT-Standard geänderten Frequenzbereich des ISM-Bandes lediglich ein gegenüber den in DECT-Geräten eingesetzten ZF-Filtern geändertes ZF-Filter vorgesehen ist, das die halbe Bandbreite des entsprechenden DECT-ZF-Filters aufweist.

8. Funk-Nachrichtenübertragungssystem nach einem der vorhergehenden Ansprüche, **gekennzeichnet durch** eine Verwendung für Schnurlostelefone.

## Claims

1. Digital multiple subscriber radio message transmission system, which operates using a frequency hopping technique and is derived from a DECT radio system, for use in the 2.4 GHz ISM frequency band, in which provision is made for the radio-frequency parts of the devices which are used in the system to be matched to the ISM frequency band, which is not the same as the DECT Standard,
**characterized**
**in that** a 20 dB channel bandwidth of a maximum of 1 MHz which must be complied with is specified for the system;
**in that** the known DECT radio system, which operates using a TDMA/FDMA technique, is modified in such a way that the data transmission rate is halved in comparison to the data transmission rate specified in the DECT Standard, that is to say from 1152 kbit/s to 576 kbit/s, and
**in that** the channel separation is likewise reduced from the channel separation of 1728 kHz specified in the DECT Standard.

2. Radio message transmission system according to Claim 1, **characterized in that** time slots are combined in order to comply with the net data transmission rate.

3. Radio message transmission system according to Claim 1, **characterized in that** the channel separation is likewise halved from the channel separation of 1728 kHz as specified in the DECT Standard, that is to say it is reduced to 864 kHz.

4. Radio message transmission system according to Claim 1, **characterized in that** two time slots are combined in order to comply with the net data transmission rate.

5. Radio message transmission system according to Claim 1, **characterized by** the use of transmitter and receiver assemblies which are intended for a conventional DECT system and are partially matched to the frequencies that have been modified from the DECT Standard.

6. Radio message transmission system according to Claim 5, **characterized by** the frequencies being generated from a standard DECT system clock.

7. Radio message transmission system according to Claim 5, **characterized by** a radio-frequency part which is intended per se for use in DECT appliances and in which, in addition to the matching of the front end to the ISM frequency band, which is not the same as that in the DECT Standard, all that is provided is an IF filter that is not the same as the IF filters used in DECT appliances and which has half the bandwidth of the corresponding DECT IF filter.

8. Radio message transmission system according to one of the preceding claims, **characterized by** use for cordless telephones.

## Revendications

1. Système de transmission radio d'informations numériques, à abonnées multiples, travaillant selon la technique à saut de fréquence (frequency hopping) et dérivé d'un système radio DECT et destiné à être utilisé dans la bande des fréquences ISM à 2,4 GHz, et dans lequel il est prévu une adaptation des parties à haute fréquence des appareils utilisés dans le système à la bande de fréquences ISM modifié par rapport à la norme DECT, **caractérisé en ce que** dans le système, une largeur de bande de canal de 20 dB devant être respectée et égale au maximum à 1 MHz est prédéterminée;
que le système de transmission comporte une modification du système radio DECT connu, travaillant avec la technique TDMA/FDMA de telle sorte que la cadence de transmission de données est réduite de moitié par rapport à la cadence de transmission de données prédéterminée dans le cas de la norme DECT, c'est-à-dire de 1152 kbits/s à 576 kbits/s, et
que la distance entre canaux est réduite également de façon correspondante par rapport à la distance entre canaux prédéterminée selon la norme DECT et qui est de 1728 kHz.

2. Système de transmission radio d'informations selon la revendication 1, **caractérisé en ce que** les créneaux temporels sont rassemblés pour l'obtention de la cadence nette de transmission de données du réseau.

3. Système de transmission radio d'informations selon la revendication 1, **caractérisé en ce que** la distance entre canaux est également réduite par rapport à la distance entre canaux prédéterminée dans la norme DECT qui est de 1728 kHz, à la moitié, c'est-à-dire à 864 kHz.

4. Système de transmission radio d'informations selon la revendication 1, **caractérisé en ce que** deux créneaux temporels sont réunis pour l'obtention de la cadence nette de transmission de données.

5. Système de transmission radio d'informations selon la revendication 1, **caractérisé par** l'utilisation de modules d'émetteurs et de récepteurs, qui sont prévus pour un système DECT usuel et sont adaptés en partie aux fréquences modifiées par rapport à la norme DECT.

6. Système de transmission radio d'informations selon la revendication 5, **caractérisé par** une génération des fréquences à partir d'un système de cadencement du système DECT standard.

7. Système de transmission radio d'informations selon la revendication 5, **caractérisé par** une partie à haute fréquence, qui est prévue en soi pour être utilisée dans des appareils DECT et dans laquelle il est prévu, en sus de l'adaptation de l'extrémité avant à la gamme de fréquences de la bande ISM, modifiée par rapport à la norme DECT, uniquement un filtre ZF modifié par rapport aux filtres ZF utilisés dans les appareils DECT et qui possède la moitié de la largeur de bande du filtre DECT-ZF correspondant.

8. Système de transmission radio d'informations selon l'une des revendications précédentes, **caractérisé par** une utilisation pour des téléphones sans f
